# EUROPÄISCHE PATENTSCHRIFT

(11) **EP 2 981 778 B1**
(45) Veröffentlichungstag und Bekanntmachung des Hinweises auf die Patenterteilung: **01.11.2017**
(21) Anmeldenummer: 14724286.1
(22) Anmeldetag: 02.04.2014
(51) Int. Cl.: F26B 3/06, F26B 21/04, B01D 53/06, B01D 53/26, F24F 3/14, F26B 21/08

(54) **VERFAHREN ZUM TROCKNEN VON SCHÜTTGUT**
METHOD FOR DRYING BULK MATERIAL
PROCÉDÉ DE SÉCHAGE DE PRODUITS EN VRAC

(30) Priorität: 04.04.2013 AT 2442013
(43) Veröffentlichungstag der Anmeldung: 10.02.2016
(73) Patentinhaber: Wittmann Kunststoffgeräte GmbH, 1220 Wien (AT)
(72) Erfinder: FUX, Erhard, A-1230 Wien (AT)
(74) Vertreter: Graschitz, Roland
(86) Internationale Anmeldenummer: PCT/AT2014/000068
(87) Internationale Veröffentlichungsnummer: WO 2014/161015

(56) Entgegenhaltungen:
- AT-A4- 508 754
- DE-A1- 3 625 013
- DE-A1- 4 437 494
- US-A1- 2010 205 821

## Beschreibung

Die Erfindung betrifft ein Verfahren zum Trocknen von Schüttgut, insbesondere Feststoffen, wie Granulate, Pulver, Körner, Folien, Schnipsel, o. dgl., vorzugsweise Kunststoffgranulat, in einem Trocknungssilo mittels eines Luftstromes, wobei die aus dem Trocknungssilo austretende befeuchtete Rückluft bzw. der Prozess-Luftstrom die in einer ein Trocken- bzw. Adsorptionsmittel enthaltenden Trocknungszelle, vorzugsweise einem, aus einem Luftverteilungs-Deckel und einem Luftverteilungs-Boden mit dazwischen angeordneter drehbarer Trommel bestehendem, Radtrockner, getrocknet und als Trocken-Luftstrom dem Schüttgut wieder zugeführt wird und in dem Radtrockner weiters das Adsorptionsmittel regeneriert wird. Gemäß der US 2010/205821 A1 ist ein Verfahren zum Trocknen von Schüttgut bekannt, wie es auch im Oberbegriff der vorliegenden Anmeldung aufgezeigt ist. Zur Trocknung der aus dem Trocknungssilo austretenden Rückluft sind weiter verschiedene Verfahren und Vorrichtungen bekannt.

Aus der AT 509 475 B1 ist ein Verfahren der eingangs zitierten Art bekannt. Gemäß diesem bekannten Verfahren wird in dem Radtrockner das Adsorptionsmittel regeneriert und gekühlt. Die drehbare Trommel des Radtrockners wird dazu in mindestens drei Kreissegmente geteilt, wobei der Bereich eines Kreissegments zur Trocknung bzw. Entfeuchtung des Prozess-Luftstromes, der Bereich des zweiten Kreissegments zum Heizen bzw. zur Regeneration des Adsorptionsmittels und der Bereich des dritten Kreissegments zur Kühlung des Adsorptionsmittels herangezogen wird. Der Energiebedarf dieses Verfahrens setzt sich aus den drei Teilen des Verbrauches beim Heizen, Kühlen und dem Verbrauch zur Trocknung bzw. Entfeuchtung zusammen.
Ein anderes bekanntes Verfahren zeigt die DE 36 25 013 A1. Im Zuge dieses bekannten Verfahrens wird die aus dem Trocknungstrichter austretende Abluft in einem ein Adsorptionsmittel enthaltenden Trockner getrocknet und dem Schüttgut als Trockenluft wieder zugeführt.

Weiters ist aus der DE 197 57 537 A1 ein Verfahren und eine Vorrichtung zum Trocknen und Erhitzen von Luft, die zum Trocknen von Schüttgut dient, bekannt. Diese Vorrichtung besteht im Wesentlichen aus mindestens einer Trockenpatrone bzw. Trocknungszelle, einem nachgeordneten Lufterhitzer, einer nachgeordneten Trockengutkammer bzw. Trocknungssilo und einer nachgeordneten Kühlvorrichtung.

Ferner ist aus der DE 101 18 762 A1 ein Verfahren zur Regeneration feuchtigkeitsbeladener Prozessluft bekannt. Dabei wird die atmosphärische Luft aufgeheizt und der zu regenerierenden Trocknungspatrone zugeführt. Die anschließende Rückkühlung der Trocknungspatrone erfolgt mit einem aus der getrockneten Prozessluft abgezweigten Teilluftstrom.

Aus der EP 0 712 656 B1 ist ein Verfahren zum Trocknen feuchter Luft bekannt und aus der EP 740 956 A2 ein Verfahren und eine Vorrichtung zum Aufbereiten eines, insbesondere Feuchte, enthaltenden Adsorptionsmittels.

Darüber hinaus ist aus der DE 2 025 205 A1 eine Vorrichtung mit mehreren Kammern zur selektiven Adsorption von Molekülen bekannt.

Eine Einrichtung der eingangs aufgezeigten Art ist aus der AT 505 391 B1 bekannt. Gemäß dieser Einrichtung wird der Abluft-Luftstrom einem, im Radtrockner vorgesehenen und mit dem Adsorptionsmittel verbundenen, Zuführkanal zugeführt, im Radtrockner umgelenkt, über das Adsorptionsmittel geführt und anschließend als Trockenluftstrom nochmals umgelenkt und in einem Abführkanal entgegen der Strömungsrichtung im Zuführkanal abgeleitet und dem Trocknungssilo zugeführt. Ein Nachteil dieses Radtrockners ist, dass durch die hohen Strömungswiderstände aufgrund der Umlenkungen hohe Drücke notwendig sind.

Alle oben genannten Verfahren und Vorrichtungen weisen vor allem die Nachteile auf, dass die Einrichtungen einer sehr aufwendigen Bauweise bedürfen und bei den Verfahren ein hoher Energieverbrauch gegeben ist.

Aufgabe der Erfindung ist es, ein Verfahren der eingangs zitierten Art zu schaffen, die einerseits die obigen Nachteile vermeidet und die anderseits sowohl in der Anschaffung, wie auch im Betrieb, global gesehen, die Wirtschaftlichkeit, insbesondere im Betrieb, erhöht.
Die Aufgabe wird durch die Erfindung gelöst.
Das erfindungsgemäße Verfahren dadurch gekennzeichnet, dass die Trommel des Radtrockners durch den Luftverteilungs-Deckel und den Luftverteilungs-Boden in nur zwei mit Luft durchströmbare Bereiche geteilt wird, wobei ein Bereich zum Regenerieren des Adsorptionsmittels und der andere Bereich zur Trocknung bzw. Entfeuchtung des Prozess-Luftstromes herangezogen wird und dass der Bereich zur Trocknung bzw. Entfeuchtung des Prozess-Luftstromes an den Bereich zum Regenerieren des Adsorptionsmittels direkt anschließt, wobei das heiße Adsorptionsmittel ungekühlt in den Bereich zur Trocknung bzw. Entfeuchtung des Prozess-Luftstromes eingebracht wird. Mit dem erfindungsgemäßen Verfahren ist es erstmals möglich, den Energieverbrauch im Betrieb, gegenüber den herkömmlichen Verfahren, stark zu reduzieren.
Zeolith braucht zum Regenerieren, also zum Entfeuchten und Trocknen eine Temperatur über 200 °C. Je höher die Temperatur wäre, umso besser würde der Wirkungsgrad sein. Für die Regeneration einer gewissen Zeolithmenge ist daher ein bestimmter Energieaufwand, abhängig von Temperatur, Zeit und Luftstrom, notwendig. Auf Grund des Feuchtigkeitsgrades des Zeoliths kann daher der optimale Energieverbrauch bestimmt werden. Eine Energiezufuhr über den Sättigungsbereich hinaus ist nutzlos. In Hinblick auf die Temperaturbeständigkeit der im Prozess eingebundenen Maschinenteile und Komponenten, wie Dichtungen, die bei etwa 280° C liegt, ist aber der Höhe der Temperatur Grenzen gesetzt.
Wie an sich bekannt, ist der Energieverbrauch zum Trocknen und Entfeuchten des Abluft-Luftstromes sehr stark von der Heizleistung in der Regenerationsphase bestimmt. Entsprechend den zum Stand der Technik zählenden Verfahren und deren Philosophie war es, einen gleichmäßigen Taupunkt zu erreichen. Um diesen Taupunkt zu erreichen, wurde nach der Regenerationsphase eine Kühlphase vorgesehen. In dieser Kühlphase wurde das Adsorptionsmittel auf kleiner 80° C abgekühlt.

Entsprechend der der Erfindung zugrunde liegenden Philosophie, nämlich den Qualitätsstandard der Trockenluft zu bestehenden Anlagen zumindest zu halten, jedoch die Wirtschaftlichkeit, durch Energieeffizienz, zu erhöhen, wird bewusst vor dem Trocknen und Entfeuchten des Adsorptionsmittels auf die Kühlphase verzichtet. Gemäß der vorliegenden Erfindung - und hier ist der gravierende Vorteil zu sehen - wird dieser Energieverbrauch, durch die ungekühlte Einbringung des heißen Adsorptionsmittels in den Bereich zur Trocknung bzw. Entfeuchtung des Prozess-Luftstromes, eingespart. Die Energieeinsparung beträgt etwa 15 bis 25%.

Wie ja an sich bekannt, sind zur Trocknung und Entfeuchtung des Rückluft-Luftstromes Einrichtungen mit Patronen oder mit dem Radtrockner in Verwendung. Insbesondere in tropischen Gebieten sind die Patronentrockner oft nicht gefragt. In diesen Gebieten kommen somit Radtrockner zum Einsatz. Generell haben Radtrockner den Vorteil, dass sie autark ihren Betrieb gestalten. Das vorliegende erfindungsgemäße Verfahren ist prinzipiell für beide Einsätze geeignet.

Gemäß einem ganz besonderen Merkmal der Erfindung wird der Regenerations-Luftstrom für die Regeneration des Adsorptionsmittels als Teilluftstrom aus dem Prozess-Luftstrom entnommen. Durch diese Maßnahme wird die Heizleistung aufgrund der trockenen Luft reduziert. Eine etwaige Befeuchtung durch Außenluft wird vermieden. Der gravierende Vorteil ist jedoch darin zu sehen, dass für die Anlage kein eigenes Gebläse für den Regenerations-Luftstrom vorgesehen werden muss.

Nach einem weiteren Merkmal der Erfindung laufen die Trocknung und Entfeuchtung für den Prozess-Luftstrom und die Regeneration des Adsorptionsmittels parallel, insbesondere kontinuierlich im Dauerbetrieb, ab. Im Trocknungsverfahren wird zwischen hoher und geringer Wasserlast unterschieden. Zufolge dieses Schlusses wird gemäß dem vorliegenden erfindungsgemäßen Verfahren die Regenerationsphase bei hoher Wasserlast im Dauerbetrieb gefahren.

Gemäß einer ganz besonderen Weiterbildung der Erfindung wird die Regeneration des Adsorptionsmittels im Intervallbetrieb durchgeführt, wobei die Trommel des Radtrockners gestoppt wird und nach der Regeneration um einen wählbaren Bereich, vorzugsweise dem Bereich für die Regeneration, weitergetaktet wird. Wie bereits erwähnt, wird im Trocknungsverfahren zwischen hoher und geringer Wasserlast unterschieden. Zufolge dieses Schlusses wird gemäß dem vorliegenden erfindungsgemäßen Verfahren die Regenerationsphase bei geringer Wasserlast im Intervall-Betrieb gefahren. Das heißt, die Heizung zum Aufheizen des Adsorptionsmittels und gegebenenfalls das zugehörige Gebläse werden bewusst einen Zeitraum abgeschaltet. Mit einem derartigen Intervall-Betrieb verläuft die Kurve für den Taupunkt nur unwesentlich abweichender von der Idealkurve, wobei jedoch die Abweichung für den Qualitätsstandard nicht spürbar ist.

Nach einer weiteren Ausgestaltung der Erfindung wird im Intervallbetrieb, bei stehender Trommel, nach der Regeneration die Heizung für die Regeneration abgestellt und der unaufgeheizte Teilstrom des Prozess-Luftstromes durchströmt den Bereich zum Regenerieren. Vorteilhafterweise wird dadurch ein optimaler Taupunkt für die Trocknung und Entfeuchtung erreicht.

Gemäß einer weiteren besonderen Ausgestaltung der Erfindung wird der Bereich zum Regenerieren kleiner als der Bereich zum Trocknen bzw. Entfeuchten des Prozess-Luftstromes festgelegt. Dadurch wird in vorteilhafterweise ein kontinuierlicher Gesamtprozess möglich, wobei durch die kleinere räumliche Einheit für die Regeneration des Adsorptionsmittels trotzdem ein optimaler gleichmäßiger Taupunkt über die Betriebszeit erreicht wird.

Nach einer besonderen Ausbildung der Erfindung beträgt der Bereich der Trocknung bzw. Entfeuchtung etwa 260 bis 300 Bogengrade und der Bereich zum Heizen bzw. Regenerieren etwa 60 bis 100 Bogengrade. Wie sich in Versuchen gezeigt hat, wird dadurch ein optimaler Taupunkt für die Trocknung und Entfeuchtung erreicht.

Gemäß einer Weiterbildung der Erfindung werden über die, durch den Luftverteilungs-Deckel bzw. Luftverteilungs-Boden, vorgegebene Luftführung mehrere Einheiten, bestehend aus einem Bereich Regeneration und einem Bereich Trocknung und Entfeuchtung, auf der drehbaren Trommel des Radtrockners vorgesehen. Eine Skalierung des erfindungsgemäßen Verfahrens auf einem Radtrockner ist dadurch möglich.

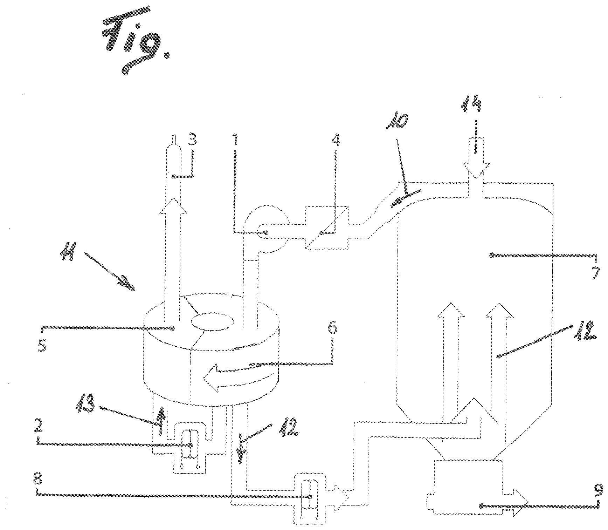

Die Erfindung wird an Hand eines Ausführungsbeispieles, das in der Zeichnung dargestellt ist, näher erläutert.

Es zeigt die Fig. ein Schema des Verfahrens.

Gemäß der Fig. sind schematisch die Luftführungen für das Verfahren zum Trocknen von Schüttgut, insbesondere Feststoffen, wie Granulate, Pulver, Körner, Folien, Schnipsel, o. dgl., vorzugsweise Kunststoffgranulat aufgezeigt. Das Kunststoffgranulat wird in einem Trocknungssilo 7 mittels eines Trocken-Luftstromes 12 getrocknet. Zur Trocknung der aus dem Trocknungssilo 7 mit Feuchtigkeit behafteten, austretenden Rückluft bzw. des Prozess-Luftstromes 10 im Bereich 6 der Trocknungs- bzw. Entfeuchtungsphase wird der Prozess-Luftstrom 10 über ein Rückluft-Filter 4 und ein Prozessgebläse 1 mit dem, ein Trocken- bzw. Adsorptionsmittel enthaltenden, Radtrockner 11 verbunden. In dem Radtrockner 11 wird der Prozess-Luftstrom 10 getrocknet. Der Prozess-Luftstrom 10 wird als Trocken-Luftstrom 12, über eine Heizung 8, dem Trocknungssilo 7 wieder zugeführt.

Der Trocknungssilo 7 wird über eine Zuführung 14, beispielsweise mit Kunststoffgranulat, befüllt. Über einen Absaugkasten 9 wird das getrocknete Kunststoffgranulat zur Weiterverarbeitung aus dem Trocknungssilo 7 ausgebracht.

Der Radtrockner 11 besteht aus einem Luftverteilungs-Deckel und einem Luftverteilungs-Boden mit dazwischen angeordneter drehbarer Trommel.
Die Trommel des Radtrockners 11 wird durch den Luftverteilungs-Deckel und den Luftverteilungs-Boden in zwei mit Luft durchströmbare Bereiche geteilt. Ein Bereich 5 wird zum Regenerieren des Adsorptionsmittels und der andere Bereich 6 zur Trocknung bzw. Entfeuchtung des Prozess-Luftstromes 10 herangezogen. Der Bereich 6 zur Trocknung bzw. Entfeuchtung des Prozess-Luftstromes 10 schließt an den Bereich 5 zum Regenerieren des Adsorptionsmittels an, wobei das heiße Adsorptionsmittel ungekühlt in den Bereich 6 zur Trocknung bzw. Entfeuchtung des Prozess-Luftstromes eingebracht wird.

Das Adsorptionsmittel wird im Radtrockner 11, im Bereich 5, der Regenerationsphase, regeneriert. Zur Regeneration des Adsorptionsmittels wird ein Regenerations-Luftstrom 13 als Teilluftstrom aus dem Prozess-Luftstrom 10 entnommen. Der Regenerations-Luftstrom 13 wird über eine Regenerations-Heizung 2 geführt, aufgeheizt und dann dem Radtrockner 11 zugeführt. Nach durchströmen des Radtrockners 11 wird der Regenerations-Luftstrom 13 über einen Abluftschacht 3 an die Umwelt abgeführt. Vorteilhafterweise muss daher für die Anlage kein eigenes Gebläse für den Regenerations-Luftstrom 13 vorgesehen werden.

Die Trocknungs- bzw. Entfeuchtungsphase 6 für den Prozess-Luftstrom 10 wird kontinuierlich im Dauerbetrieb geführt. Vorzugsweise wird auch die Regeneration des Adsorptionsmittels parallel im Dauerbetrieb zur Trocknungs- bzw. Entfeuchtungsphase durchgeführt.

Wie bereits angesprochen, benötigt Zeolith zum Regenerieren, also zum Entfeuchten und Trocknen eine Temperatur über 200 °C. Für die Regeneration einer gewissen Zeolithmenge ist daher ein bestimmter Energieaufwand, abhängig von Temperatur, Zeit und Luftstrom, notwendig.

Weiters ist es bekannt, dass für den Bereich 6, der Trocknung und Entfeuchtung des Prozess-Luftstromes 10 eine Temperatur in der Größenordnung von 80° C, für manche Granulatarten auch bis zu 180° C, optimal ist.

Entsprechend den bekannten Verfahren zum Stand der Technik, siehe beispielsweise die AT 509 475 B1, wird das den Bereich 5 der Regeneration verlassende Adsorptionsmittel mit Energieaufwand in einem eigenen Bereich des Radtrockners 11 gekühlt. Entsprechend der der Erfindung zugrunde liegenden Philosophie, nämlich den Qualitätsstandard der Trockenluft zu bestehenden Anlagen zumindest zu halten, jedoch die Wirtschaftlichkeit zu erhöhen, wird bewusst auf diese Kühlphase verzichtet. Die durch die Regeneration quasi überschüssige Energie im Adsorptionsmittel wird als Speicherenergie in der Trocknungs- und Entfeuchtungsphase verwendet.

Durch den Verzicht auf die Kühlphase ergibt sich eine Energieeinsparung von etwa 15 bis 25 % des Gesamtenergieverbrauches im Betrieb der Anlage.

Es ist bekannt, dass auf Grund des Feuchtigkeitsgrades des Zeoliths daher der optimale Energieverbrauch bestimmt werden kann. Eine Energiezufuhr über den Sättigungsbereich hinaus bringt somit keinen deutlich besseren Wirkungsgrad und ist Energieverschwendung. Wie an sich weiters bekannt, ist der Energieverbrauch des Trockenvorganges in der Trocknungs- bzw. Entfeuchtungsphase sehr stark von der Heizleistung in der Regenerationsphase bestimmt.

Um nun der der Erfindung zugrunde liegenden Philosophie weiter zu folgen, nämlich den Qualitätsstandard der Trockenluft zu bestehenden Anlagen zumindest zu halten, jedoch die Wirtschaftlichkeit zu erhöhen, wird bewusst im Trocknungsverfahren zwischen hoher und geringer Wasserlast unterschieden. Zufolge dieses Schlusses wird gemäß dem vorliegenden erfindungsgemäßen Verfahren die Regenerationsphase bei geringer Wasserlast im Intervall-Betrieb gefahren. Das heißt, die Regenerations-Heizung 2 zum Aufheizen des Adsorptionsmittels wird einen Zeitraum abgeschaltet. Der unaufgeheizte Teilstrom des Prozess-Luftstromes 10 kann den Bereich 5 zum Regenerieren durchströmen. Mit einem derartigen Intervall-Betrieb verläuft die Kurve für den Taupunkt nur unwesentlich abweichender von der Idealkurve, wobei jedoch die Abweichung für den Qualitätsstandard nicht spürbar ist.

Durch eine bewusste Auslegung, nämlich dass der Bereich 5 zum Regenerieren kleiner als der Bereich 6 zum Trocknen bzw. Entfeuchten des Prozess-Luftstromes 10 festgelegt wird, kann eine weitere Optimierung des Gesamtprozesses erreicht werden. Bevorzugt beträgt der Bereich 6 der Trocknung bzw. Entfeuchtung etwa 260 bis 300 Bogengrade und der Bereich 5 zum Heizen etwa 60 bis 100 Bogengrade.

Für eine Skalierung des Verfahrens auf dem Radtrockner 11 ist es möglich über die, durch den Luftverteilungs-Deckel bzw. Luftverteilungs-Boden, vorgegebene Luftführung mehrere Einheiten, bestehend aus einem Bereich 5 Regeneration und einem Bereich 6 Trocknung und Entfeuchtung, auf der drehbaren Trommel des Radtrockners 11 vorzusehen.

## Patentansprüche

1. Verfahren zum Trocknen von Schüttgut, insbesondere Feststoffen, wie Granulate, Pulver, Körner, Folien, Schnipsel, o. dgl., vorzugsweise Kunststoffgranulat, in einem Trocknungssilo (7) mittels eines Luftstromes, wobei die aus dem Trocknungssilo (7) austretende befeuchtete Rückluft bzw. der Prozess-Luftstrom (10) die in einer ein Trocken- bzw. Adsorptionsmittel enthaltenden Trocknungszelle, vorzugsweise einem, aus einem Luftverteilungs-Deckel und einem Luftverteilungs-Boden mit dazwischen angeordneter drehbarer Trommel bestehendem, Radtrockner (11), getrocknet und als Trocken-Luftstrom (12) dem Schüttgut wieder zugeführt wird und in dem Radtrockner (11) weiters das Adsorptionsmittel regeneriert **dadurch gekennzeichnet, dass** die Trommel des Radtrockners (11) durch den Luftverteilungs-Deckel und den Luftverteilungs-Boden in nur zwei mit Luft durchströmbare Bereiche geteilt wird, wobei ein Bereich (5) zum Regenerieren des Adsorptionsmittels und der andere Bereich (6) zur Trocknung bzw. Entfeuchtung des Prozess-Luftstromes (10) herangezogen wird und dass der Bereich (6) zur Trocknung bzw. Entfeuchtung des Prozess-Luftstromes (10) an den Bereich (5) zum Regenerieren des Adsorptionsmittels direkt anschließt, wobei das heiße Adsorptionsmittel ungekühlt in den Bereich (6) zur Trocknung bzw. Entfeuchtung des Prozess-Luftstromes (10) eingebracht wird.

2. Verfahren nach Anspruch 1, **dadurch gekennzeichnet, dass** der Regenerations-Luftstrom (13) für die Regeneration des Adsorptionsmittels als Teilluftstrom aus dem Prozess-Luftstrom (10) entnommen wird.

3. Verfahren nach Anspruch 1 oder 2, **dadurch gekennzeichnet, dass** die Trocknung und Entfeuchtung für den Prozess-Luftstrom (10) und die Regeneration des Adsorptionsmittels parallel, insbesondere kontinuierlich im Dauerbetrieb, ablaufen.

4. Verfahren nach Anspruch 1 oder 2, **dadurch gekennzeichnet, dass** die Regeneration des Adsorptionsmittels im Intervallbetrieb durchgeführt wird, wobei die Trommel des Radtrockners (11) gestoppt wird und nach der Regeneration um einen wählbaren Bereich, vorzugsweise dem Bereich für die Regeneration, weitergetaktet wird.

5. Verfahren nach Anspruch 4, **dadurch gekennzeichnet, dass** im Intervallbetrieb, bei stehender Trommel, nach der Regeneration die Heizung (2) für die Regeneration abgestellt wird und der unaufgeheizte Teilstrom des Prozess-Luftstromes (10) den Bereich zum Regenerieren durchströmt.

6. Verfahren nach einem oder mehreren der Ansprüche 1 bis 5, **dadurch gekennzeichnet, dass** der Bereich (5) zum Regenerieren kleiner als der Bereich (6) zum Trocknen bzw. Entfeuchten des Prozess-Luftstromes (10) festgelegt wird.

7. Verfahren nach einem oder mehreren der Ansprüche 1 bis 6, **dadurch gekennzeichnet, dass** der Bereich (6) der Trocknung bzw. Entfeuchtung etwa 260 bis 300 Bogengrade und der Bereich (5) zum Heizen etwa 60 bis 100 Bogengrade beträgt.

8. Verfahren nach einem oder mehreren der Ansprüche 1 bis 7, **dadurch gekennzeichnet, dass** über die, durch den Luftverteilungs-Deckel bzw. Luftverteilungs-Boden, vorgegebene Luftführung mehrere Einheiten, bestehend aus einem Bereich (5) Regeneration und einem Bereich (6) Trocknung und Entfeuchtung, auf der drehbaren Trommel des Radtrockners (11) vorgesehen werden.

## Claims

1. Method for drying bulk material, in particular solids, such as granulates, powder, grains, foils, chips, or the like, preferably plastic granulate, in a drying silo (7) by means of an air flow, wherein the moistened returned air or the process air flow (10) that emerges from the drying silo (7) is dried in a drying cell containing a drying or adsorbent agent, said drying cell preferably being a wheel dryer (11) consisting of an air distribution cover and an air distribution floor having a rotatable drum arranged there between, and returned in the form of a drying air flow (12) to the bulk goods again and the adsorbent agent is furthermore regenerated in the wheel dryer (11), **characterized in that** the drum of the wheel dryer (11) is divided by the air distribution cover and the air distribution floor into only two regions through which air is able to flow, wherein one region (5) is used to regenerate the adsorbent agent and the other region (6) is used for drying or dehumidifying the process air flow (10) and that the region (6) for drying or dehumidifying the process air flow (10) directly adjoins the region (5) for regenerating the adsorbent agent, wherein the hot adsorbent agent is introduced uncooled into the region (6) for drying or dehumidifying the process air flow (10).

2. Method in accordance with claim 1, **characterized in that** the regeneration air flow (13) for regenerating the adsorbent agent is taken from the process air flow (10) as partial air flow.

3. Method in accordance with claim 1 or 2, **characterized in that** the drying and dehumidifying for the process air flow (10) and the regenerating of the adsorbent agent occur in parallel, in particular in a continuous manner during permanent operation.

4. Method in accordance with claim 1 or 2, **characterized in that** the regenerating of the adsorbent agent is carried out during operation at intervals, whereby the drum of the wheel dryer (11) is stopped and advanced to a selectable region, preferably the region for regenerating, after the regenerating.

5. Method in accordance with claim 4, **characterized in that**, during operation at intervals, while the drum stands still, the heater (2) for the regenerating is switched off after the regeneration and the unheated partial flow of the process air flow (10) flows through the region for regenerating.

6. Method in accordance with one or more of claims 1 to 5, **characterized in that** the region (5) for regenerating is defined smaller than the region (6) for drying or dehumidifying the process air flow (10).

7. Method in accordance with one or more of claims 1 to 6, **characterized in that** the region (6) for drying or dehumidifying amounts to approximately 260 to 300 arc degrees and the region (5) for heating amounts to approximately 60 to 100 arc degrees.

8. Method in accordance with one or more of claims 1 to 7, **characterized in that**, by means of the airflow predefined by the air distribution cover or air distribution floor, multiple units, consisting of a region (5) for regenerating and a region (6) for drying and dehumidifying, are provided on the rotatable drum of the wheel dryer (11).

## Revendications

1. Procédé de séchage de produits en vrac, notamment de corps solides tels que granules, poudres, graines, feuilles en plastique, copeaux etc., et de préférence de granules en plastique, dans un silo de séchage (7) au moyen d'un flux d'air, l'air ou le flux d'air humide du processus (10) sortant du silo de séchage (7) étant séché dans une cellule contenant un agent déshydratant ou d'adsorption, et de préférence dans une roue de séchage (11) composé d'un couvercle et d'un fond de diffusion de l'air , ainsi que d'un tambour rotatif installé entre les deux; l'air ou le flux d'air séché (12) étant acheminé vers le produit en vrac et l'agent d'adsorption étant régénéré dans la roue de séchage (11). Ce procédé est **caractérisé par le fait que** le tambour de la roue de séchage (11) est séparé par le couvercle de diffusion et le fond de diffusion de l'air en deux parties seulement, dans lesquelles l'air peut circuler, ainsi que **par le fait que** l'une des parties (5) sert à la régénération de l'agent d'adsorption, et l'autre (6), au séchage ou à la déshydratation du flux d'air du processus (10), laquelle autre (6) servant au séchage ou à la déshydratation du flux d'air de processus (10) est adjacente à la première partie (5) servant à la régénération de l'agent d'adsorption, ce dernier étant introduit à chaud, non refroidi, dans la partie (6), afin qu'il sèche et déshydrate le flux d'air du processus (10).

2. Procédé selon la revendication 1, **caractérisé par le fait que** le flux d'air de régénération (13) est prélevé sous la forme d'un flux d'air partiel dans le flux d'air du processus (10) à des fins de régénération de l'agent d'adsorption.

3. Procédé selon les revendications 1 ou 2, **caractérisé par le fait que** le séchage et la déshydratation du flux d'air de processus (10) d'une part, et la régénération de l'agent d'adsorption (10) de l'autre, se déroulent en parallèle (10) notamment pendant l'opération en continu.

4. Procédé selon les revendications 1 ou 2, **caractérisé par le fait que** la régénération de l'agent d'adsorption est effectuée par intervalles, le tambour de la roue de séchage (11) étant arrêté et relancé après la régénération en passant à une gamme séléctionnable, et de préférence à la gamme de régénération.

5. Procédé selon la revendication 4, **caractérisé par le fait que** l'opération par intervalles, tambour à l'arrêt, est interrompue pendant la régénération du chauffage (2), et que le flux partiel du flux d'air, non chauffé, du processus (10) circule dans la partie de régénération.

6. Procédé selon l'une ou plusieurs revendications 1 à 5, **caractérisé par le fait que** la partie de régénération (5) est plus petite que la partie de séchage ou de déshydratation (6) du flux d'air de processus (10).

7. Procédé selon l'une ou plusieurs revendications 1 à 6, **caractérisé par le fait que** la partie (6) de séchage ou de déshydratation est d'environ 260 à 300 degrés (angle), et celle de chauffage (5) d'environ 60 à 100 degrés (angle).

8. Procédé selon l'une ou plusieurs revendications 1 à 7, **caractérisé par le fait que** la conduite d'air déterminée par le couvercle et le fond de diffusion d'air définissent plusieurs unités sur le tambour rotatif de la roue de séchage (11), c.à.d. une partie de régénération (5) et une partie de séchage et de déshydratation (6).
